# EUROPEAN PATENT SPECIFICATION

(11) **EP 0 690 256 B1**
(45) Date of publication and mention of the grant of the patent: **06.05.1999**
(21) Application number: 95304611.7
(22) Date of filing: 30.06.1995
(51) Int. Cl.: F16L 23/024, F16L 21/02

(54) **Gripping element for a pipe coupling**
Spannelement für eine Rohrverbindung
Elément de serrage pour un raccord de tuyaux

(30) Priority: 01.07.1994 GB 9413229
(43) Date of publication of application: 03.01.1996
(73) Proprietor: VICTAULIC PLC, Hitchin Hertfordshire SG4 0UD (GB)
(72) Inventor: Harper, Brian, Hitchin, Herts, SG4 0RS (GB); Rex, Brian, Hitchin, Herts, SG5 2HH (GB)
(74) Representative: Hutchins, Michael Richard

(56) References cited:
- WO-A-90/10813
- US-A- 3 594 023

## Description

This invention relates to a gripping element for a pipe coupling, and to a pipe coupling incorporating the gripping element. More particularly, the invention relates to a gripping element for use with pipe couplings intended to connect together pipes made from notch-sensitive materials such as polyvinylchloride (PVC).

It is to be understood that by the expression "pipe" as used herein is meant any pipe-like member such as a pipe as such, and also pipe fittings such as "T"-junctions, elbows, bends, reducers and valve inlets, for example.

Numerous mechanical couplings for plastics pipes are known. Such couplings typically include means for creating a seal between the pipes, and in some cases the couplings are designed to both seal and grip onto the radially outer surface of the pipe, gripping means being provided to enable the pipe joint to resist the end load due to *inter alia* internal pressures and other mechanical forces.

Generally, gripping mechanisms take the form of annular gripping rings, or a plurality of gripping teeth segments, which embed themselves into the pipe surface providing a resistance to pipe axial movement.

However, with certain pipe materials, and in particular certain plastics pipe materials such as polyvinylchloride (PVC), the notch created by the gripping element or teeth can cause notch cracking, leading to fracture of the pipe when the pipe is subjected to normal working stresses. For this reason, users and installers of PVC pipes have traditionally been somewhat reticent about using pipe couplings which incorporate such gripping elements.

Since PVC is a well established material for making pipes for conveying, e.g. water, it is desirable that mechanical couplings should be made available which not only provide a seal between pipes, but also provide some form of gripping arrangement to enhance the ability of the joint to resist end loads.

It is an object of the present invention to overcome, or at least alleviate to a substantial extent, the aforementioned problems, and to provide such a mechanical coupling.

Accordingly, the invention provides a gripping device for use in a pipe coupling, the gripping device being arranged to grip the wall of a pipe and comprising an annular support, the annular support having non-rotatably mounted thereon or formed integrally therewith a plurality of circumferentially spaced apart gripping elements disposed around the circumference thereof and protruding therefrom, each gripping element having a gripping edge for biting into and gripping the pipe wall, the gripping edge defining a localised continuous closed loop.

Each gripping edge forms a localised continuous closed loop, the term "localised" meaning that the gripping edge is not intended to grip the pipe around the entire circumference of a pipe wall, but is intended to provide a very localised gripping effect which may extend over a small proportion of the circumference of the pipe.

Preferably, each gripping edge is so dimensioned that the circumferential length around each pipe wall over which each said gripping element is in contact with the pipe wall, is no more than π/5 radians, more preferably no more than π/10 radians and most preferably no more than π/15 radians.

Preferably the gripping elements are circumferentially spaced apart such that the circumferential distance between adjacent gripping elements on the same circumference is greater than half the said circumferential length.

The gripping elements can all be arranged on the same circumference, or may be arranged along several axially spaced circumferential lines extending around a pipe surface. Where the gripping elements are arranged on more than one circumferential line, they may advantageously be arranged in a staggered format.

The continuous closed loop defined by the gripping edge may be free from corners, or it may have corners defining a multi-sided shape. Thus, when the closed loop has no corners, it may define a circle, or a distorted form thereof such as an oval. Alternatively, it may have an amorphous form.

When the loop defines a multi-sided shape, it may be a polygonal shape, regular or irregular. For example, the loop can define a triangular, rectangular, pentagonal, hexagonal, heptagonal, or octagonal shape, or a shape having a greater number of sides.

In one embodiment, each loop may be defined by two or more interconnecting loops. For example, the loop could take the form of two circular loops connected to form a "figure of eight" arrangement.

Preferably, however, each gripping element defines a single continuous circular loop.

By means of the continuous closed loop form of the gripping element, any crack formed from the root of a notch in a pipe wall during use would be confined to the loop rather than extending towards and joining up with notches formed by adjacent gripping elements. Consequently, although localised notch cracking may take place, fracturing of the pipe wall is avoided.

The gripping elements of the present invention may be presented on the annular support so as to grip either the radially inner surface (pipe ID surface) or the radially outer surface (pipe OD surface) of the pipe. The gripping elements may, for example, be mounted on or formed integrally with a discrete annular ring arranged to form part of a compression joint, but could also, for example, be mounted in the radially outer surface of a liner of the type typically used for coupling together plastics pipes. As will be appreciated, the precise form of the annular support is not important provided that the coupling provides some means for urging the gripping elements into contact with the pipe wall, or vice-versa.

However, in one particular advantageous form, the annular support comprises a plurality of discrete segments connected together so as to form an annulus. Each said segment may have one or more gripping elements protruding therefrom. In a particularly preferred embodiment, each said segment has a single gripping element integrally formed therewith and protruding therefrom.

The gripping elements of the present invention may be formed from any material which is harder than the material of the pipe wall which it is intended to grip. Thus, in most instances, the gripping elements will be formed from a suitable metal material, for example aluminium or steel.

In a further aspect, the invention provides a pipe coupling comprising a gripping device as hereinbefore defined, and means for urging the gripping elements into contact with the wall of a pipe so as to grip said pipe wall.

In a still further aspect, the invention provides a pipe joint formed between two pipes and incorporating a pipe coupling having a gripping device as hereinbefore defined.

The gripping device of the present invention may be used in particular with PVC pipes, and pipes formed from other materials which have a tendency towards notch cracking and consequent pipe fracture. For example, the gripping device of the present invention could be used in conjunction with couplings for coupling together pipes formed from glass reinforced plastics material (GRP).

The invention will now be illustrated, but not limited, by reference to the particular embodiment illustrated in the accompanying drawings, of which:
Figure 1 is an isometric schematic view of a pipe end illustrating the annular notches created by an array of conventional gripping rings;
Figure 2 is an isometric schematic view illustrating a pipe encircled by an array of gripping elements according to one embodiment of the present invention;
Figure 3 is an isometric view of one of the gripping elements shown in Figure 2;
Figure 4 is a side sectional elevation of the gripping element shown in Figure 3;
Figure 5 is an isometric schematic view showing the grooves formed in the surface of a pipe by the gripping elements illustrated in Figures 2 to 4;
Figure 6 is a sectional elevation along line Z-Z in Figure 5;
Figure 7 is an axial end view of an annular support having mounted thereon an array of the gripping elements illustrated in Figures 2 to 4;
Figure 8 is a longitudinal sectional elevation through a pipe joint incorporating a gripping device according to a second embodiment of the invention; and
Figure 9 is an isometric view of a segment of the gripping device shown in Figure 8.

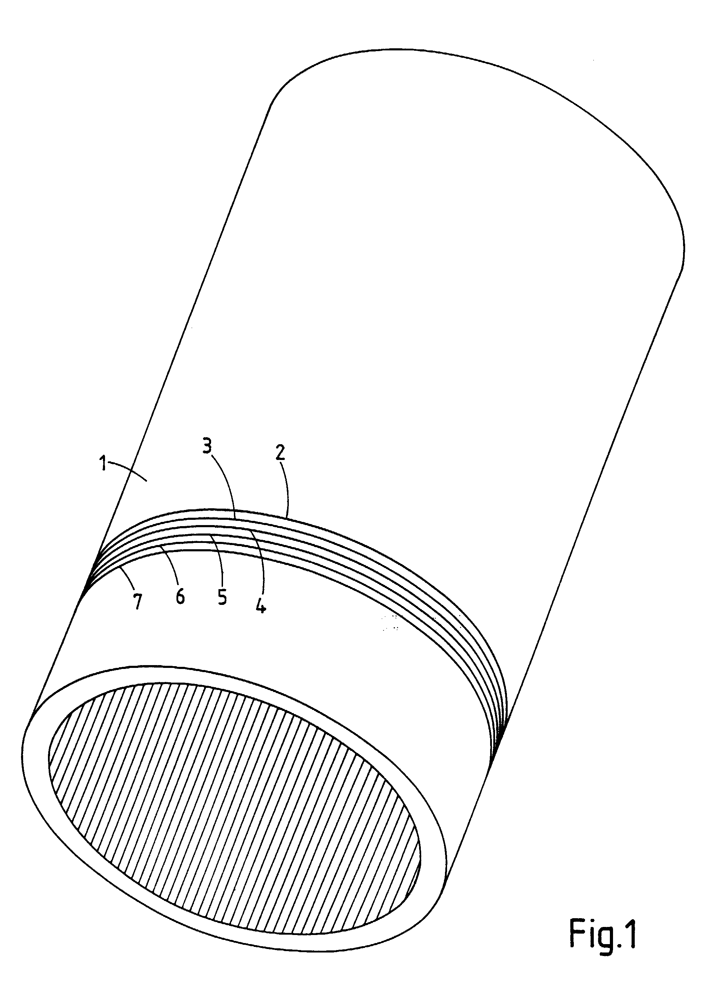

Referring now to Figure 1, this Figure illustrates schematically a pipe end to which a pipe coupling having a plurality of axially spaced annular gripping rings has been applied, and then removed. In this particular instance, six axially spaced circumferential grooves 2, 3, 4, 5, 6 and 7 have been formed by virtue of the gripping rings being urged against the pipe surface. In polyethylene pipes, such grooves or notches do not give rise to a problem, but with plastics materials of lesser toughness, such as PVC, the grooves represent a point of weakness, with cracks forming in the pipe wall beneath the bottom of the groove and propagating around the circumference of the pipe to cause pipe fracture.

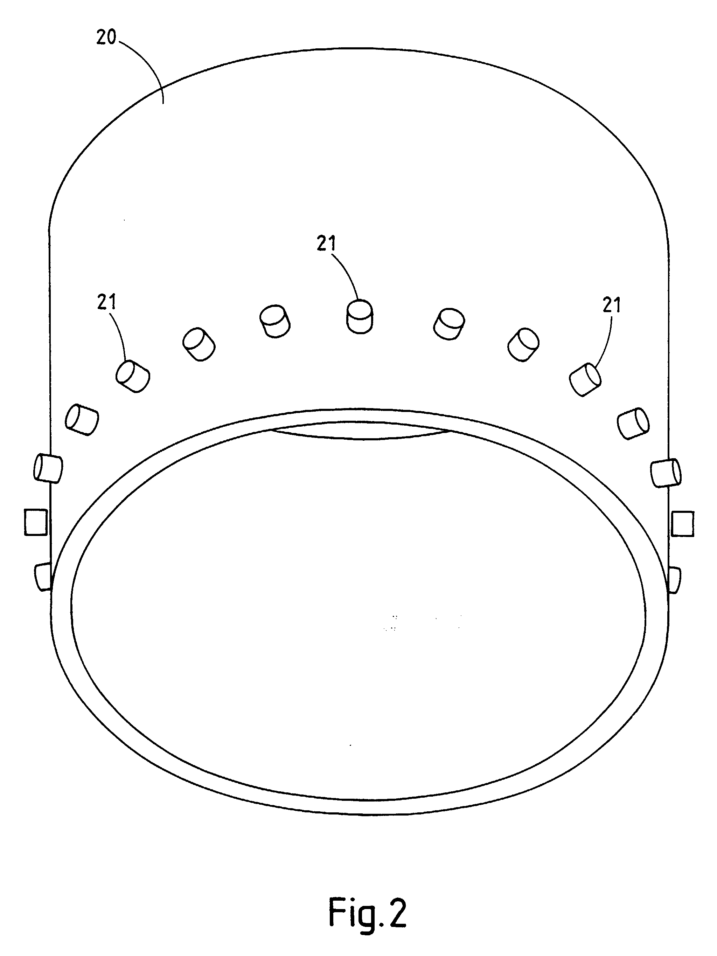

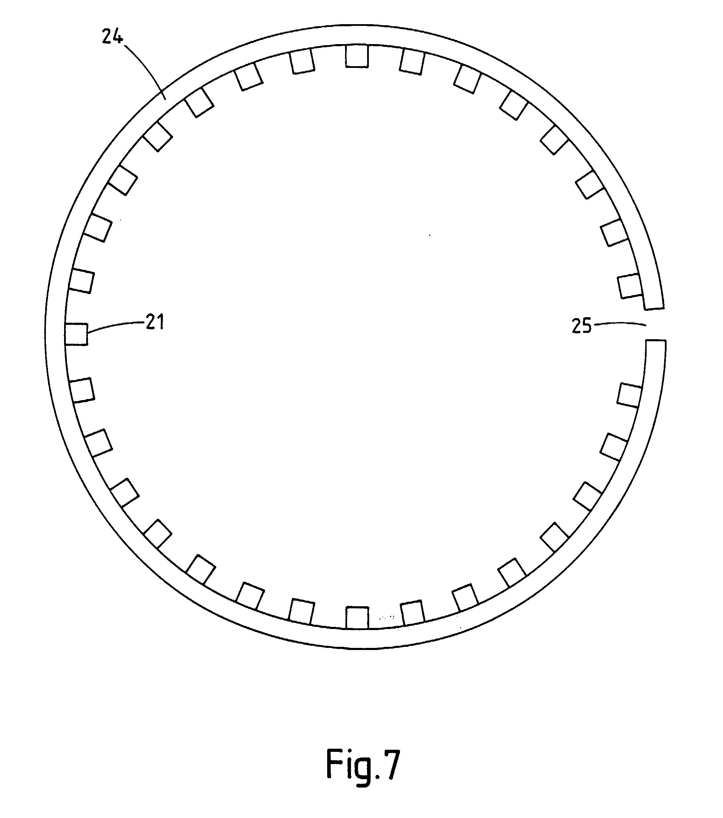

In Figure 2, there is illustrated a pipe 20 surrounded by an array of circumferentially spaced apart gripping elements 21 according to one embodiment of the present invention. The gripping elements are mounted on an annular supporting ring, one particular form of which is shown in Figure 7, and are spaced at intervals around the pipe circumference. It will be noted in this particular embodiment that the distance between adjacent gripping elements is significantly greater than the diameter of each gripping element, but this need not be the case. For example, the distance could be as little as half the diameter of the gripping element.

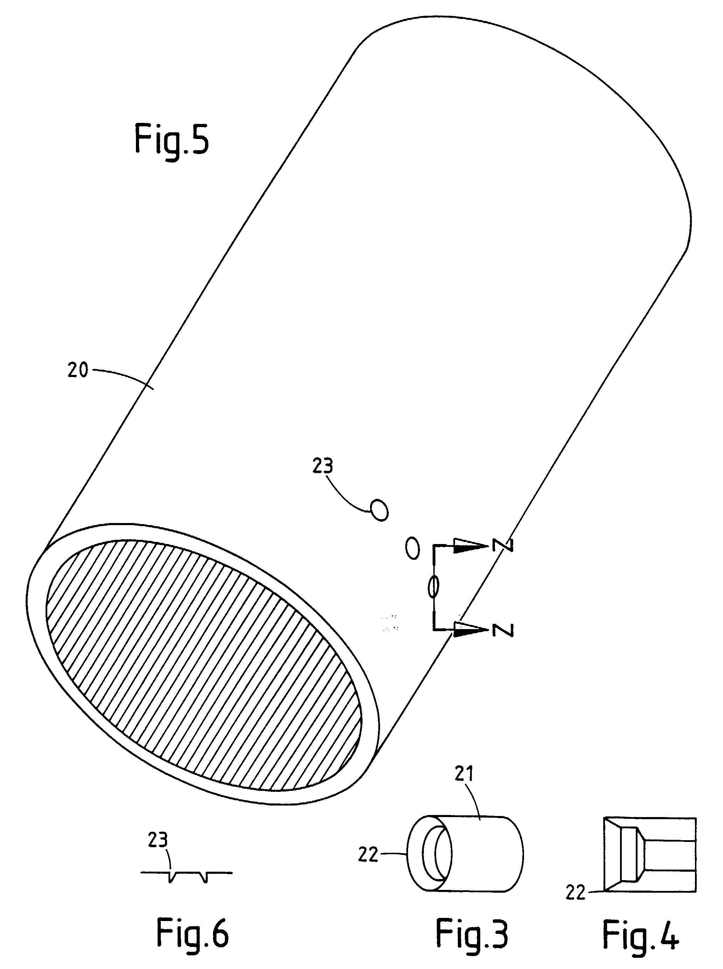

The gripping elements 21 are illustrated in more detail in Figures 3 and 4, from which it can be seen that each gripping element 21 has a generally cylindrical form, and is generally hollow. At one axial end of the gripping element, a gripping edge 22 is provided, the gripping edge 22 forming a continuous closed loop.

In use, the gripping element is urged into contact with the wall of pipe 20, the gripping edge 22 biting into the surface of the pipe wall to form grooves 23, the profile of which is illustrated in Figure 6.

In the event of any notch cracking occurring, the crack propagates only around the circular groove 23 created by the gripping edge 22 and is thus localised. Extension of the crack to neighbouring grooves 23, therefore does not occur, and fracturing of the pipe wall is thereby avoided.

It will be appreciated that it is important that the cutting edge should form a continuous closed loop, so as to confine any notch cracking to the path followed by the loop. If the gripping edge 22 were discontinuous, notch cracking could well extend from a discontinuity on the gripping edge and into contact with a notch formed by an adjacent gripping element or randomly about the pipe. Thus, the potential would exist for the notch or crack to propagate around the entire circumference of the pipe thereby leading to pipe fracture.

The precise shape of the gripping edge 22 is considered not to be critical, and rather than being circular the edge could, for example, be of ovular shape or could even have an entirely irregular shape. Alternatively, the gripping edge 22 could be of a multisided shape, for example rectangular, hexagonal or the like, or could be in the form of two or more interconnected loops, for example forming a "figure of eight" shape.

Furthermore, although the profile of the gripping edge is shown in cross-section as being generally V-shaped, it need not be. For example, it could have a blunter profile such as a rounded profile or a square edged profile.

The gripping elements 21 can be mounted on, or formed integrally with, an annular supporting ring 24 as shown in Figure 7. The supporting ring 24 is a split ring, the break 25 allowing the ring to be compressed in a typical compression joint.

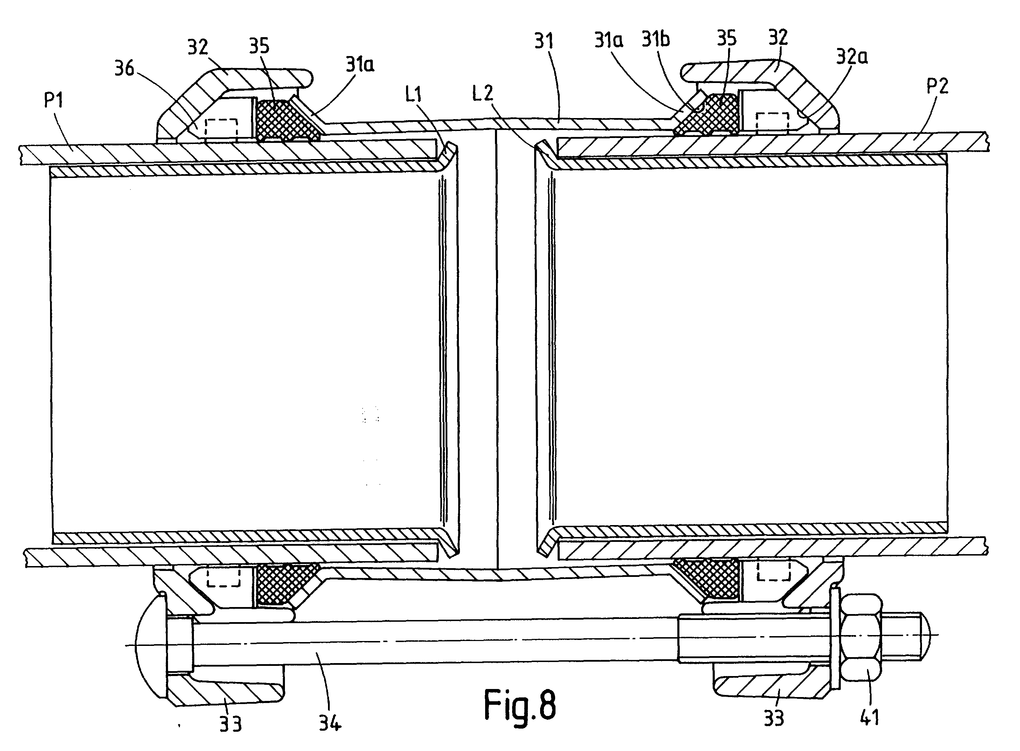

Figure 8 illustrates a pipe joint incorporating a gripping device according to a second embodiment of the invention. As shown in Figure 8, the pipe joint comprises an annular sleeve 31 of generally flattened W-shaped cross-section. The ends P1 and P2 of two PVC pipes are shown as being inserted into the ends of annular sleeve 31. Pipes P1 and P2 have liner elements L1 and L2 which serve to stiffen the pipe ends against radial collapse when the pipe joint is tightened. At either end of the sleeve 31 are disposed annular collars 32 each of which are provided with a plurality of radially outwardly extending formations 33 through which bolts 34 are inserted.

Disposed generally radially within the flared ends 31a of the sleeve 31 are gaskets 35 which are formed from a suitable elastomeric material.

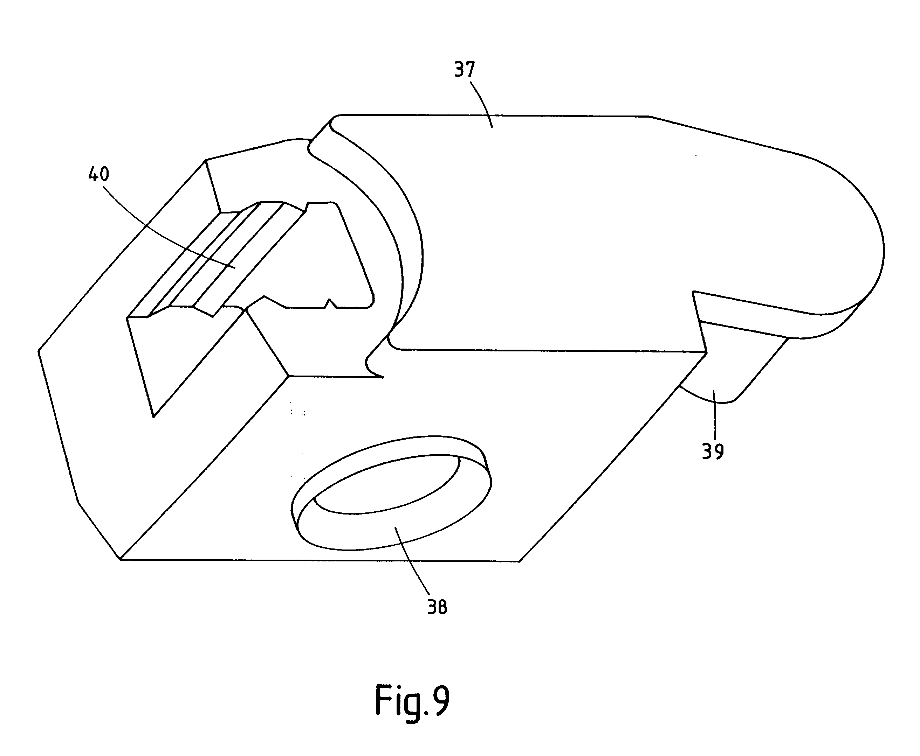

Disposed axially outwardly of the gaskets 35, but within the annular collars 32, are gripping devices 36. The gripping device 36 comprises an annular array of linked segments 37, the construction of which is illustrated in more detail in Figure 9. Thus, the gripping segment 37 has a circular gripping edge 38 of generally similar dimensions to the gripping edge 22 illustrated in Figures 3 and 4. In this case however, the gripping edge 38 is formed integrally with the segment 37. Each segment 37 has a lug or boss 39 and a retaining pocket 40. As will be apparent from Figure 9, the gripping device is assembled by inserting the lug or boss 39 of one gripping segment into the retaining pocket 40 of another gripping segment, repeating the operation until an annulus is formed. Gripping segments 37 can easily be formed by, for example, a suitable moulding or casting process.

In order to connect the two pipes P1 and P2 firmly together, the bolt 34 and associated nut 41 are tightened thereby drawing the two annular collars 32 axially together. The gasket 35 and the gripping device 36 are compressed between inclined surfaces 32a of the annular collar and 31b of the sleeve such that both the gasket 35 and the gripping device 36 are deformed radially inwardly and into contact with the wall of the pipes P1 and P2. The gasket 35 serves to establish an annular seal between the coupling sleeve 31 and the pipes P1 and P2, whilst the gripping device 36 serves to anchor the pipes P1 and P2 against displacement by an end load on the pipes.

In the drawings, a single circumferential array of gripping elements is illustrated. It will be appreciated however that several axially spaced circumferential arrays could be employed. With such an arrangement the gripping elements on adjacent circumferential lines could be arranged in a staggered conformation.

## Claims

1. A gripping device for use in a pipe coupling, the gripping device being arranged to grip the wall of a pipe and comprising an annular support (24), the annular support (24) having non-rotatably mounted thereon or formed integrally therewith a plurality of circumferentially spaced apart gripping elements (21) disposed around the circumference thereof and protruding therefrom, each gripping element (21) having a gripping edge (22) for biting into and gripping the pipe wall, the gripping edge (22) defining a localised continuous closed loop.

2. A gripping device according to Claim 1 wherein each gripping edge (22) is so dimensioned that the circumferential length around each pipe wall over which each said gripping element (21) is in contact with the pipe wall is no more than π/5 radians.

3. A gripping ring device according to Claim 1 or Claim 2 wherein the gripping elements (21) are circumferentially spaced apart such that the circumferential distance between adjacent gripping elements (21) on the same circumference is greater than half the said circumferential length.

4. A gripping device according to any one of the preceding Claims wherein the continuous closed loop defines a circle, or a distorted form thereof such as an oval, or has an amorphous form.

5. A gripping device according to any one of Claims 1 to 3 wherein the continuous closed loop is of a polygonal shape.

6. A gripping device according to any one of Claims 1 to 3 wherein each loop is defined by two or more interconnecting loops.

7. A gripping device according to any one of the preceding Claims wherein the gripping elements (21) are mounted on or formed integrally with a discrete annular ring (24) arranged to form part of a compression joint.

8. A gripping device according to any one of Claims 1 to 6 wherein the annular support comprises a plurality of linked segments (37), each segment having one or more gripping elements (38) mounted thereon or formed integrally therewith.

9. A gripping device according to Claim 8 wherein each segment has a single gripping element (38) mounted thereon or formed integrally therewith.

10. A gripping device according to Claim 9 wherein the single gripping element (38) is formed integrally with the segment.

11. A gripping device according to any one of Claims 8 to 10 wherein the segments (37) are substantially identical in form, each segment having a lug portion (39) and a retaining pocket (40), the lug portion (39) being arranged to engage and be retained by the retaining pocket (40) of another segment (37) so as to connect adjacent segments together.

12. A gripping device according to any one of the preceding Claims wherein the gripping elements are formed from a suitable metal material.

13. A pipe coupling comprising a gripping device as defined in any one of Claims 1 to 12, and means for urging the gripping elements into contact with the wall of a pipe so as to grip said pipe wall.

14. A pipe joint formed between two pipes and incorporating a pipe coupling having a gripping device as hereinbefore defined.

## Patentansprüche

1. Spannpratze zum Gebrauch in einer Rohrkupplung, die so angeordnet ist, daß sie die Wand eines Rohres ergreift, und sie hat einen ringförmigen Träger (24); dieser ringförmige Träger (24) hat nicht drehbar darauf gehalten oder einstückig damit eine Vielzahl von umfangsmäßig beabstandeten Krallenelementen (21), die um den Umfang davon verteilt angeordnet sind und daraus hervorstehen; jedes Krallenelement (21) hat eine Kallenkante (22), um in die Rohrwandung zu beißen und zu kratzen; die Krallenkante (22) beschreibt eine örtlich durchgehend geschlossene Schleife.

2. Spannpratze nach Anspruch 1, wobei jede Spannkrallenkante (22) so dimensioniert ist, daß deren umfangsmäßige Länge um jede Rohrwandung, auf der jedes Krallenelement (21) in Kontakt ist, höchstens Π/5 radian beträgt.

3. Spannpratzenring nach Anspruch 1 oder 2, wobei die Krallenelemente (21) umfangsmäßig so voneinander beabstandet sind, daß der umfangsmäßige Abstand zwischen benachbarten Krallenelementen (21) auf dem Umfang größer als die Hälfte jener genannten umfangsmäßigen Länge ist.

4. Spannpratze nach einem der vorstehenden Ansprüche, wobei die durchgehend geschlossene Schleife einen Kreis oder eine verformte Gestalt desselben, wie ein Oval, beschreibt oder gestaltlos ist.

5. Spannpratze nach einem der Ansprüche 1 bis 3, wobei die durchgehend geschlossene Schleife eine Polygongestalt hat.

6. Spannpratze nach einem der Ansprüche 1 bis 3, wobei jede Schleife durch zwei oder mehr verbundene Schleifen bestimmt ist.

7. Spannpratze nach einem der vorstehenden Ansprüche, wobei die Krallenelemente (21) auf einen gegenständlichen umfänglichen Ring (24) montiert sind mit diesem einstückig ausgeformt sind, der so angeordnet ist, daß er Teil einer Druckverbindung ist.

8. Spannpratze nach einem der Ansprüche 1 bis 6, wobei der ringförmige Träger eine Vielzahl von verkoppelten Segmenten (37) hat; jedes Segment hat ein oder mehrere Krallenelement(e) (38), die daran montiert sind oder damit einstückig geformt sind.

9. Spannpratze nach Anspruch 8, wobei jedes Segment ein einziges Krallenelement (38) hat, das daran montiert ist oder einstückig damit geformt ist.

10. Spannpratze nach Anspruch 9, wobei das einzige Krallenelement (38) einstückig mit dem Segment geformt ist.

11. Spannpratze nach einem der Ansprüche 8 bis 10, wobei die Segmente (37) im wesentlichen identisch geformt sind; jedes Segment hat einen Zapfenteil (39) und eine Aufnahmetasche (40); das Zapfenteil (39) ist so angeordnet, daß es durch die Aufnahmetasche (40) eines anderen Segments (37) aufgenommen und zurückgehalten wird, so daß benachbarte Segmente miteinander verbunden sind.

12. Spannpratze nach einem der vorstehenden Ansprüche, wobei die Krallenelemente aus einem geeigneten metallischen Material geformt sind.

13. Rohrverbinder, der eine Spannpratze, wie in einem der Ansprüche 1 bis 12 definiert, enthält und Mittel enthält, um die Krallenelemente in Kontakt mit der Wandung eines Rohres zu zwingen, um die Rohrwandung festzukrallen.

14. Rohrverbindung, die zwischen zwei Rohren ausgebildet ist und einen Rohrverbinder beinhaltet, der eine Spannpratze hat, wie vorstehend definiert.

## Revendications

1. Un dispositif de serrage destiné à être utilisé dans un raccordement de conduites, le dispositif de serrage étant prévu pour serrer la paroi d'une conduite et comprenant un support annulaire (24), le support annulaire (24) comportant, montés sans aptitude de rotation sur lui ou formés en une seule pièce avec lui, une pluralité d'éléments de serrage (21) écartés les uns des autres circonférentiellement, disposés autour de sa circonférence, et faisant saillie sur lui, chaque élément de serrage (21) présentant un bord de serrage (22) pour mordre et serrer la paroi de conduite, le bord de serrage (22) définissant une boucle localisée continue fermée.

2. Un dispositif de serrage selon la revendication 1, dans lequel chaque bord de serrage (22) est dimensionné d'une façon telle que la longueur circonférentielle autour de chaque paroi de conduite sur laquelle ledit élément de serrage (21) est en contact avec la paroi de conduite ne dépasse pas π/5 radians.

3. Un dispositif de serrage selon la revendication 1 ou 2, dans lequel les éléments de serrage (21) sont circonférentiellement écartés les uns des autres d'une manière telle que la distance circonférentielle entre des éléments de serrage (21) voisins sur la même circonférence est supérieure à la moitié de ladite longueur circonférentielle.

4. Un dispositif de serrage selon l'une quelconque des revendications précédentes, dans lequel la boucle fermée continue définit un cercle, ou une forme altérée de celui-ci tel qu'un ovale, ou bien a une forme amorphe.

5. Un dispositif de serrage selon l'une quelconque des revendications 1 à 3, dans lequel la boucle fermée continue est de forme polygonale.

6. Un dispositif de serrage selon l'une quelconque des revendications 1 à 3, dans lequel chaque boucle est définie par deux ou plusieurs boucles entrecroisées.

7. Un dispositif de serrage selon l'une quelconque des revendications précédentes, dans lequel les éléments de serrage (21) sont montés sur, ou formés en une seule pièce avec, une bague annulaire discret (24) prévue pour faire partie d'un joint de compression.

8. Un dispositif de serrage selon l'une quelconque des revendications 1 à 6, dans lequel le support annulaire comprend une pluralité de segments (37) reliés entre eux, chaque segment comportant un ou plusieurs éléments de serrage (38) montés sur lui ou formés en une seule pièce avec lui.

9. Un dispositif de serrage selon la revendication 8, dans lequel chaque segment comporte un unique élément de serrage (38) monté sur lui ou formé en une seule pièce avec lui.

10. Un dispositif de serrage selon la revendication 9, dans lequel l'unique élément de serrage (38) fait partie intégrante du segment.

11. Un dispositif de serrage selon l'une quelconque des revendications 8 à 10, dans lequel les segments (37) sont de formes sensiblement identiques, chaque segment comportant une partie formant tenon (39) et une cavité de retenue (40), la partie formant tenon (39) étant prévue pour s'engager et être retenue dans la cavité de retenue (40) d'un autre segment (37) afin de relier ensemble des segments voisins.

12. Un dispositif de serrage selon l'une quelconque des revendications précédentes, dans lequel les éléments de serrage sont formés en un matériau métallique approprié.

13. Un raccordement de conduites comprenant un dispositif de serrage tel que défini dans l'une quelconque des revendications 1 à 12, et des moyens pour forcer les éléments de serrage en contact avec la paroi d'une conduite de manière à serrer ladite paroi de conduite.

14. Un raccord de conduites formé entre deux conduites et comprenant un raccordement de conduites pourvu d'un dispositif de serrage tel que précédemment défini.
